# EUROPEAN PATENT SPECIFICATION

(11) **EP 3 235 766 B1**
(45) Date of publication and mention of the grant of the patent: **11.12.2019**
(21) Application number: 17165350.4
(22) Date of filing: 06.04.2017
(51) Int. Cl.: B65G 53/36, B65G 65/40, B65D 90/54, B01D 21/24

(54) **APPARATUS AND METHOD FOR TREATING WASTE WATER**
VORRICHTUNG UND VERFAHREN ZUR BEHANDLUNG VON ABWASSER
APPAREIL ET PROCÉDÉ DE TRAITEMENT DES EAUX USÉES

(30) Priority: 06.04.2016 IT UA20162335
(43) Date of publication of application: 25.10.2017
(73) Proprietor: Le Officine Riunite - Udine SpA, 33030 Basaldella di Campoformido (UD) (IT)
(72) Inventor: Salvadori, Renzo, 53036 Poggibonsi (SI) (IT)
(74) Representative: Petraz, Gilberto Luigi

(56) References cited:
- DE-A1- 2 617 837
- US-A- 1 784 132
- US-A- 5 346 629
- US-A1- 2009 050 581

## Description

### FIELD OF THE INVENTION

Embodiments described here concern a unit and a method for treating waste water.

Merely by way of example, the treatment unit and method can be used to treat the water resulting from washing machines and apparatuses, including mobile ones, used in any type of cement plant, although application is not excluded to treating waste water of any other type, for example coming from civil or industrial plants. Other possible applications of the present invention can be, for example, plants for treating or crushing inert materials, plants for separating working residues, for example marble, for depositing first flush rainwater, or more generally any small grain material dispersed in water, with a specific weight greater than that of water.

### BACKGROUND OF THE INVENTION

In concrete producing plants, there is the problem of recycling and/or disposing of the water used for washing the concrete making machines, and those used for transporting the concrete such as truck mixers, concrete mixer pumps, concrete mixer belts, mixers, grabbers, sluices, belts, molds, or for washing floors.

A truck mixer can return to the plant with quantities of 200-300 liters, which can even reach 500-600 liters of concrete for a mixer pump. Higher returning quantities of concrete, that is, a cubic meter of concrete or more, require large quantities of water for dilution, and are not easily tolerated by the first separation plants that are commonly used.

In the state of the art, these plants comprise one or more mechanical separators, with a screw, rotary drum, cups etc., which with the combined effect of washing with water, allow a first screening of the larger components: gravel, pebbles, sand, silt, etc.

Generally, these systems separate from the water those elements with a grain size of more than 0.25 mm, and store the dirty water thus treated in one or more collection tanks. The water is only partly used because of the high content of fine particles still present inside it: it is presumed that the mechanical systems are able to remove about 50-60% of the solid components present in it. It is therefore clear that the fine particles will tend to accumulate in progressively higher concentrations in the storage tanks.

Various regulations are also known, which limit the weight of the fine aggregates that can be re-introduced into the concrete with the recycled water to a predefined percentage portion.

Regulations are also known which limit the quantity of solids suspended in water that can be discharged into the sewers. These regulations also set limits on the pH of the liquid discharged into the sewers, which must usually be comprised between 5.5 and 9.5. The solid residues in suspension contained in the washing waters deriving from concrete making usually exceed this limit, and do not allow the excess residual water to be discharged into the sewers.

It may possibly be permitted to discharge into the sewers after a treatment to neutralize the pH, for example with CO₂ plants.

It is obvious that, if gradual and constant interventions are not carried out, the progressive uncontrolled accumulation of pollutants in the water entails high management costs and disposal costs for producers of concrete.

The separation plants generally used at concrete making plants solve the problem of separating the solid residues with high grain size from the water, but they do not solve the problem of the remaining quantity of fine particles that remain in suspension in the water. These fine particles are to all effects waste, and tend to deposit and accumulate in storage tanks for the dirty water.

There is so much of this water that it cannot be discharged into the sewers and more generally into the environment, not only because it contains high concentrations of solid particles, but also because it has a pH much higher than 9.5, normally around 13.

Furthermore, the tanks have to be periodically emptied of water to allow to clean the residues that have sedimented on the bottom.

Therefore, in this step, there are two problems:
a) care must be taken that the alkaline water containing high concentrations of solid residues is correctly disposed of or stored elsewhere;
b) the bottom of the tanks must be periodically cleaned with manual or mechanical means, storing in suitable areas the solid residues/waste deriving from the cleaning.

The main consequence if this activity is only performed occasionally is that the accumulation of high quantities of solid residues prevents the possible re-use/recycling/ disposal of the water.

A large quantity of residues makes it extremely difficult to perform a first washing and first cleaning, even if it is followed by the use of a part of clean water, normally about 400-500 liters.

A first solution is known, which provides to recover the water containing fine particles in suspension for washing the residual concrete in the truck mixers, or for the production of concrete, within the limits allowed by the regulations. Although this solution is generally the one most used, it entails a partial re-use and progressive increase in the fine particles in the water which is generally stored in collection tanks.

A second solution is also known, usually used for small productions of water, for example a few cubic meters a day, in which the water is clarified by a filter with bags, also called big bags.

Another solution is also known, which provides to use mechanical filters, for example press filters, to separate the fine particles from the water. This method, although effective, has high plant and management costs.

Another known solution provides to make an accelerated decantation of the fine particles in suspension using flocculants. This known solution has the main disadvantages of high running costs and the management of the flocculants. Moreover, the decanted slurry is removed using a slurry pump. Such pumps normally function well with liquid slurry, but are ineffective for treating decanted slurry or slurry with a great viscosity or compactness.

A plant for treating slurry is also known from WO-A-2013/179122, which comprises a decanting tank in which the liquid to be treated is inserted and on the bottom of which the solid material, that is, the fine particles present in suspension in the liquid to be treated, accumulates through decantation. At the bottom of the decanter, where the decanted material accumulates, a suction pump is connected, to suck up the decanted material.

However, as described above, using a suction pump is particularly problematic because the decanted material, accumulating on the bottom, is hard and compact and in practice substantially impossible to suck up, unless it is fluid enough to be removed by suction. Usually, to this purpose the decanted material is diluted with water, to make it less compact and more fluid. However, in practice, this makes the decantation that has just been carried out useless, or at least not very efficient. Indeed, using a suction pump, which requires to use water for dilution that is removed in large quantities together with the decanted material, makes it necessary for the diluted decanted material to be treated again in the decanter, in practice making the overall treatment inefficient. Furthermore, using a suction pump does not allow to identify certainly and unequivocally the moment when all the decanted material has been actually removed from the tank.

Document DE-A-26.17.837 describes a plant for separating slurry from water, which comprises a slurry separation container connected at its base to a slurry collection chamber. Between the slurry separation container and the slurry collection chamber a valve is provided. At the base of the collection chamber a pump is provided, for discharging the slurry that has accumulated in the slurry collection chamber. An interception valve is provided between the pump and the base of the collection chamber to put these two selectively into fluidic communication. However, this solution has the same problems as described above with regard to the presence of a pump for discharging the slurry.

From document US-A-5.346.629 a plant is also known for cleaning a fluid, which comprises a washing tank in which objects are washed with washing liquid.

The washing water is transferred to a filter device where the impurities present in the water are filtered. The impurities filtered by the filter, together with a part of the water in which they are in suspension, are then conveyed to a sedimentation apparatus which comprises a sedimentation tank provided with a first region and a region where the sediment is collected, located behind the first region and in which the sediment is collected.

The first region and the collection region are separated from each other by a separation device.

The collection region has at a lower end a discharge aperture that can be closed by a closing member.

The separation device and the closing member are defined by sliding flat valves.

However, because of the geometrical and structural conformations of the first region, and/or the collection region and/or the separation device and/or the closing member, this apparatus for treating waste water is often subject to blockages because of the material that accumulates on the bottom of the collection region.

The solution proposed in US-A-5.346.629 is in fact intended for treating waste water containing cellulose, wood chip or suchlike, which have completely different problems from water deriving from washing concrete making plants to which the present invention refers.

In particular, the sediments of waste water from concrete making plants are subjected, in the short time from their decantation, to packing and hardening, and therefore if the sedimentation apparatuses are not suitably designed, the whole apparatus can become blocked, with consequent damage to all the members present.

Other treatment units are disclosed in US-A-2009/050581 and US-A-1.784.132.

There is therefore a need to perfect a unit and method for treating waste water which can overcome at least one of the disadvantages of the state of the art.

In particular, one purpose of the present invention is to obtain a unit for treating waste water which is simple to make and effective.

Another purpose of the present invention is to be able to recover entirely the water used, by clarifying it completely.

Another purpose of the present invention is to obtain a treatment unit that allows to separate effectively the solid part from the liquid part of the water treated, limiting the presence of a liquid portion inside the solid part that is discharged.

The Applicant has devised, tested and embodied the present invention to overcome the shortcomings of the state of the art and to obtain these and other purposes and advantages.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

### SUMMARY OF THE INVENTION

The present invention is set forth and characterized in the independent claims, while the dependent claims describe other characteristics of the invention or variants to the main inventive idea.

In accordance with some embodiments, a treatment plant for waste water is provided that comprises:
- a clarifier tank configured to contain waste water, and provided with a bottom portion in which a through aperture is made;
- an accumulation container disposed below the clarifier tank and connected to the through aperture of the clarifier tank, the accumulation container being configured to receive and contain the solid portion decanted from the waste water coming from the clarifier tank, and provided with a discharge aperture to allow the discharge of the solid portion;
- a first closing device associated with the through aperture of the clarifier tank and configured to selectively separate the clarifier tank from the accumulation container; and
- a second closing device associated with the discharge aperture of the accumulation container and configured to allow the selective discharge of the solid portion.

The waste water introduced into the clarifier tank is subjected to a decantation process and therefore is clarified, separating the solid portion which falls to the bottom of the clarifier tank and is deposited inside the accumulation container.

When the removal of the solid portion from the accumulation container is required, it is provided to close the through aperture of the clarifier tank with the first closing device, in order to prevent the water present in the clarifier tank from exiting through the accumulation container.

The discharge aperture is subsequently opened to allow the removal, by falling for example, of the solid portion present in the accumulation container.

This solution is particularly efficient and effective, it does not require the use of pumps to remove the solid portion that has accumulated and allows to drastically limit the amount of liquid present in the solid portion that is removed.

It is therefore possible to supply an extremely simple and effective solution to concrete making plants, able to recover most of the water used.

According to one aspect of the present invention, the discharge aperture has a cross section size equal to, or greater than, the maximum cross section size of the accumulation container. The accumulation container defines an accumulation compartment, for the solid portion, with a conical cross section shape with a taper that opens toward the discharge aperture

This configuration of the discharge aperture allows to prevent the solid portion remaining in the accumulation container and not being discharged. The conical cross section shape of the accumulation container also promotes the discharge of the solid portion that deposits in the accumulation container.

Indeed, the solid portion deriving from the decantation of the washing water of the concrete making plants solidifies when it is deposited and, if there is not a flared shape of the accumulation container, it would remain stuck inside and consequently block the entire treatment unit.

According to other embodiments a method for treating waste water is provided. According to one embodiment the method provides to:
- introduce the waste water into a clarifier tank and to subsequently decant it to separate the solid portion present,
- accumulate the decanted solid portion in an accumulation container disposed below the clarifier tank and connected to the clarifier tank through a through aperture made in a bottom portion of the clarifier tank;
- discharge the solid portion that has accumulated in the accumulation container by selectively closing the through aperture of the clarifier tank with a first closing device, and selectively opening a second closing device associated with a discharge aperture of the accumulation container.

Moreover, in accordance with a possible aspect of the method according to the present invention, the solid portion is discharged through the discharge aperture which has a cross section size equal to, or greater than, the maximum cross section size of the accumulation container and the accumulation container defines an accumulation compartment, for the solid portion, with a conical cross section shape with a taper that opens toward the discharge aperture.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view in section of a waste water treatment unit in accordance with embodiments described here;
- fig. 2 is a schematic view of a treatment plant comprising a treatment unit in accordance with embodiments described here;
- fig. 3 shows a perspective view of a component of the treatment unit in fig. 1, in accordance with a possible embodiment;
- figs. 4 and 5 are schematic lateral views of the component of fig. 3 in two operating positions.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Embodiments described here concern a treatment unit 10 configured to treat waste water deriving for example from the process of washing concrete-making apparatuses.

According to some embodiments, the treatment unit 10 comprises a clarifier tank or silo 11, configured to temporarily contain waste water and to allow it to be decanted and clarified so the solid portion contained therein is separated from the liquid portion.

The clarifier tank 11 can be provided with a bottom portion 12 in which a through aperture 13 is made.

According to some embodiments, the treatment unit 10 also comprises an accumulation container 14, also defined as accumulation and extraction container, disposed below the clarifier tank 11. The accumulation container 14 is configured to receive and contain the solid portion decanted from the waste water arriving from the clarifier tank 11. In substance, the accumulation container 14 is provided to accumulate the decanted material, which is then extracted as described hereafter.

The through aperture 13 of the clarifier tank 11 is connected to the accumulation container 14 in which the solid portion in suspension which is decanted in the tank 11 then deposits through gravity.

Consequently the tank 11 functions as a clarifier of the waste water to be treated, producing clarified water, while the solid material that descends through gravity from the tank 11 accumulates as decanted material in the accumulation container 14 below, which can therefore function as a decanter-extractor.

The clarifier tank 11 has a containing volume for the waste water that can be comprised between 4 and 25 times the containing volume of the accumulation container 14.

In possible implementations, at least the bottom portion 12 of the tank 11 can have a flared conformation converging toward the through aperture 13. This facilitates the flow of the solid portions toward the through aperture 13 and hence into the accumulation container 14.

According to a possible embodiment of the present invention, at least the bottom portion 12 of the tank 11 can be lined with an anti-adhesive material, to facilitate the slide of the solid portions toward the accumulation container 14.

In possible implementations, stirring devices 15 can be associated with the tank 11, configured to stir the waste water present in the tank 11 and to facilitate subsequent decantation.

According to a possible solution, the stirring devices 15 can comprise a mixing blade 16 provided to stir the waste water.

The mixing blade 16 can be installed in correspondence with the bottom portion 12 and can have a conformation at least partly mating therewith. In this way the mixing blade 16 can exert a scraping action on the bottom portion 12 of the clarifier tank 11, preventing the solid portion from depositing on the walls of the latter and promoting the discharge of the solid portion into the accumulation container 14.

The tank 11 can also be provided with feed members 17 configured to feed the waste water to the clarifier tank 11 to be subsequently clarified. The feed members 17 can be configured so as to limit the turbulence of the liquid part present during decantation.

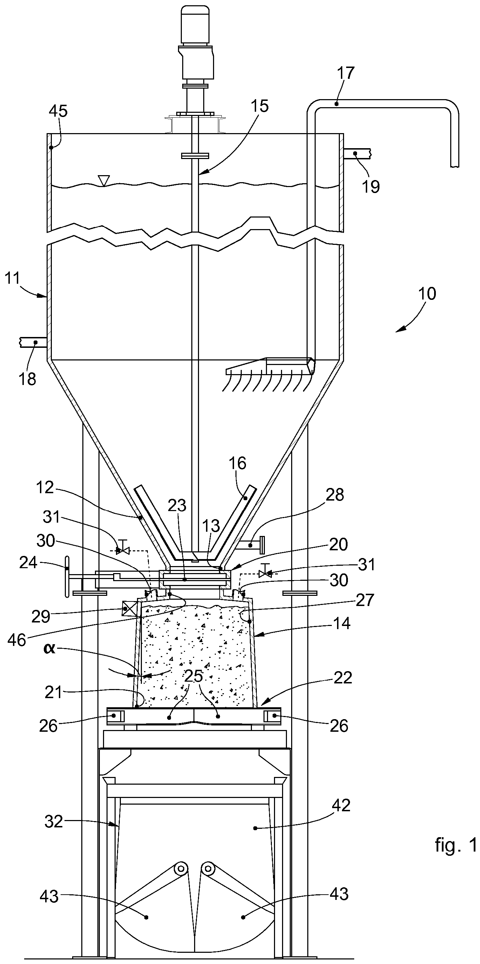

For example, in the solution shown in fig. 1, the feed members 17 can comprise a diffuser provided to limit the turbulence induced by the introduction of the water to be treated in the tank 11.

According to possible embodiments, the diffuser can be configured to deliver at least a jet against the walls of the tank 11, for example the walls located near the lower edge, to keep them clean.

According to the solution shown in fig. 1, the tank 11 can be provided with a discharge or removal member 18, to discharge the clarified water.

The discharge member 18 can be installed in an intermediate position of the height of the clarifier tank 11, so as to allow to discharge the water above the level where the discharge member 18 is positioned.

In possible embodiments of the present invention, the clarifier tank 11 can be provided with a plurality of discharge members 18 disposed at different heights and provided to allow to discharge the water with different degrees of clarification.

According to possible solutions, the discharge members 18 can provide to discharge the water directly into tanks of clarified water, as described hereafter, or can be connected to pipes for the direct re-use of the water, for example required for washing apparatuses.

According to possible solutions, from the clarifier tank 11 of the treatment unit 10 a quantity of water contained therein could be directly removed in order to rinse, for example, equipment for the production of concrete, for example the drums of the mixers, together with the water already completely clarified.

In other embodiments of the present invention, the clarifier tank 11 is provided with a safety discharge member 19, or overflow discharge, positioned near the upper edge of the tank 11 and suitable to discharge the waste water if the quantity inside the tank 11 exceeds a determinate level, in correspondence with which the safety discharge member 19 is positioned.

The clarifier tank 11, in correspondence with the bottom portion 12, is provided with a discharge valve 28 to allow the complete discharge of the waste water contained in the clarifier tank 11, for example as required for possible maintenance operations.

In its upper part, the clarifier tank 11 has an aperture 45 that puts the compartment defined by the tank 11, and therefore the waste water contained therein, into atmospheric condition. This prevents the onset of pressures inside the clarifier tank 11 which can increase the stresses to which the tank 11 is subjected internally.

A first closing device 20 is associated with the through aperture 13 of the clarifier tank 11, and is configured to selectively separate the clarifier tank 11 from the accumulation container 14 and to allow, for example, the operations to remove the solid portion deposited in the accumulation container 14.

The accumulation container 14 is also provided with an introduction aperture 46 associated with the first closing device 20, and through which the waste water arriving from the clarifier tank 11 passes to the accumulation container 14.

The introduction aperture 46 can have substantially the same size, or can be bigger than the through aperture 13 of the clarifier tank 11. This prevents the onset of blockages and/or unwanted accumulations of solid portion in correspondence with the through aperture 13.

Furthermore, the accumulation container 14 is provided with a discharge aperture 21 through which the solid portion deposited in the accumulation container 14 can be removed, to perform the operation to remove the decanted material that has accumulated here. Unlike solutions known in the state of the art, the removal of the solid portion deposited can be carried out independently of the density/consistency that it has reached.

In fact, the solid portion deposited most often contains binding substances, usually cement, which over time can aggregate to define a solid, compact structure. With the present invention, as will be clear hereafter, it is possible to allow to discharge the decanted solid portions which have also compacted together.

According to one aspect of the present invention, the discharge aperture 21 is provided with a second closing device 22 configured to close the discharge aperture 21 and prevent the waste water fed through the clarifier tank 11 from leaking. The second closing device 22 is selectively drivable to allow to open the discharge aperture 21, for example, to allow to remove the solid portion that has accumulated in the accumulation container 14.

The first closing device 20 and/or the second closing device 22 can be obtained as valves, for example chosen in a group comprising a guillotine valve or a shutter valve.

According to possible embodiments of the present invention, at least the second closing device 22 is provided with sealing elements 61, such as packings, to prevent the leakage of liquids.

According to embodiments described using fig. 1, the first closing device 20 comprises a guillotine element 23 associated with the through aperture 13 and selectively drivable by a command element 24, manual or motorized, which causes the through aperture 13 to open or close.

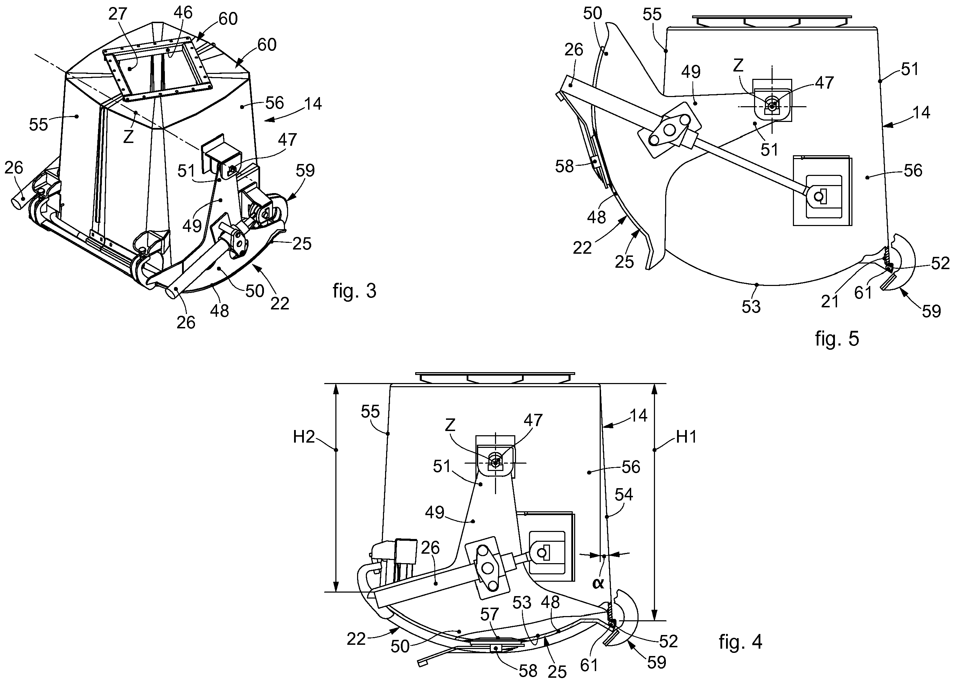

According to the embodiment shown in figs. 1, 3-5, the second closing device 22 comprises at least a shutter element 25 (figs. 3-5), selectively movable to open or close the discharge aperture 21. In the case shown in fig. 1, the second closing device 22 comprises two shutter elements 25, selectively movable reciprocally toward/away from each other to define the opening and/or closing of the discharge aperture 21.

According to the embodiments shown in figs. 3-5, the second closing device 22 comprises a single shutter element 25, selectively movable from a first position (fig. 4) in which it completely obstructs the discharge aperture 21, to a second position (fig. 5) in which the discharge aperture 21 is open.

The shutter element 25 can rotate around at least one fulcrum 47 to pass from the first to the second position. This solution allows to simplify the operations to open the shutter element 25 and to reduce the force required for the opening action.

According to a possible solution, the fulcrum 47 has an axis of rotation Z of the shutter element 25 which is positioned transverse to the axis of oblong development of the accumulation container 14. By axis of oblong development we mean the axis passing through the introduction aperture 46 and the discharge aperture 21.

According to a possible solution, the axis of rotation Z is incident to the axis of oblong development of the accumulation container 14. According to another embodiment, the axis of rotation Z is positioned in an intermediate position along the length of the axis of oblong development of the accumulation container 14.

According to a possible solution, it can be provided that the shutter element 25 is defined by a curved shaped plate 48 and by support arms 49 connected by a first end 50 to the shaped plate 48 and by a second end 51 to respective fulcrums 47 defining the axis of rotation Z.

The shaped plate 48 can be obtained by bending a flat plate on a plane orthogonal to the flat development of the flat plate itself.

In this way the shaped plate 48 has a first pair of peripheral edges with a substantially linear development, and a second pair of peripheral edges with a curved development with a radius of curvature equal to the radius of curvature of the shaped plate 48.

According to a possible solution, the accumulation container 14 has a substantially rectangular cross section shape, in this case square.

The accumulation container 14 is provided with two linear edges 52, opposite each other, and two shaped edges 53, angularly offset with respect to the linear edges 52 and having a curved development mating with the curved shape of the shaped plate 48. The linear edges 52 and the shaped edges 53 together define the discharge aperture 21 of the accumulation container 14. The sealing elements 61 which extend substantially continuously along the entire development of the discharge aperture 21 and which, in use, are positioned in contact and under pressure against the shutter element 25, can be associated with the linear edges 52 and the shaped edges 53.

In particular, when the shutter element 25 is in its position where it closes the discharge aperture 21, the shutter element is put resting against each of the linear edges 52 and the shaped edges 53 to retain the material and water contained in the accumulation container 14.

According to a possible solution, the accumulation container 14 can be defined by a front wall 54, a rear wall 55 and two lateral walls 56 connecting the front wall 54 and the rear wall 55.

The linear edges 52 can be provided in the front wall 54 and in the rear wall 55, while the shaped edges 53 are provided in the lateral walls 56.

According to a possible embodiment of the present invention, it can be provided that the front wall 54 has a height H1 which is bigger than the height H2 of the rear wall 55.

In this way, when the shutter element 25 is taken from its first position to its second position, the shutter element 25 not only defines the discharge aperture 21, it is also distanced from the linear edges 52 and from the shaped edges 53, preventing it from sliding against the solid portion contained in the accumulation container 14.

According to another embodiment of the present invention, a closing member 59 can be associated with the shutter element 25, provided to retain the shutter element 25 in a closed position against the discharge aperture 21. This solution guarantees that the shutter element 25 is held securely against the discharge aperture 21, preventing leakages of liquid.

The second closing device 22 can also comprise actuation members 26, only partly visible in fig. 1, and configured to selectively drive the opening/closing, partial and/or complete, of the second closing device 22.

The actuation members 26 can comprise linear or rotary actuators, for example hydraulic or electric actuators, or motors.

According to the solution shown in figs. 3-5, the actuation members 26 are connected to the accumulation container 14 and the second closing device 22 and their actuation determines the rotation of the shutter element 25 around the fulcrum 47.

According to the solution in fig. 4, the actuation member 26 comprises a linear actuator pivoted to the accumulation container 14 and the second closing device 22, in this case to the support arms 49 of the shutter element 25. If the solid portion deposited in the accumulation container 14 still has a semi-liquid consistency, and therefore not compacted, it is possible to open the second closing device 22 only partly, thus obtaining the discharge thereof. On the contrary, if the solid portion is compacted and solidified, the complete opening of the second closing device 22 may be required.

According to a possible solution, shown by way of example in figs. 3-5, the at least one shutter element 25 is provided with an auxiliary through aperture 57, with which a discharge valve 58 is associated, configured to selectively open/close the auxiliary aperture 57 of the shutter element 25.

Through the auxiliary aperture 57 very fluid decanted slurry can be selectively discharged, which has deposited on the bottom of the accumulation container 14.

In this way it is possible to discharge the solid portion until it has agglomerated. According to a possible solution, shown in fig. 1, the discharge aperture 21 is made in correspondence with the bottom of the accumulation container 14 so as to allow discharge through gravity, or the weight of the solid portion itself, and thus to avoid having to remove it using suitable equipment.

According to the solution shown in fig. 1, the discharge aperture 21 is made in an opposite position with respect to the connection zone of the accumulation container 14 with the through aperture 13.

According to a possible embodiment of the present invention, the discharge aperture 21 has a cross section size equal to or greater than the maximum size of the cross section of the accumulation container 14. This prevents part of the solid portion not being discharged during the discharge operations.

According to a possible embodiment, combinable with all the embodiments described here, the accumulation container 14 defines an accumulation compartment 27 for the solid portion, with a conical cross section shape with the taper opening toward the discharge aperture 21, that is, a downward flared shape, or tapered. This solution promotes the discharge of the solid portion through the discharge aperture 21, in that it facilitates the detachment of the solid portion from the accumulation container 14.

By the term conical we mean a shape of the accumulation compartment 27 with increasing sizes from its top downward.

Merely by way of example, the accumulation compartment 27 can have a conical or pyramidal shape with a polygonal base.

According to a possible solution, the accumulation compartment 27 can have a taper with an angle of taper α comprised between 2° and 20°, preferably between 5° and 15°.

The accumulation container 14 can be provided with a covering layer of the accumulation compartment 27 with an anti-adherent function for the solid portion that is deposited and an anti-corrosive function for the accumulation container 14 itself.

According to a possible solution of the present invention, a detector 29 is associated with the accumulation container 14, configured to detect the level of solid portion deposited in the accumulation container 14.

The detector 29 can comprise for example a feeler pin provided to detect the presence of the solid aggregates in the accumulation container.

In other embodiments, the detector 29 can comprise an ultrasound detector, a magnetic detector or a capacitive detector.

According to possible solutions, not shown, an inspection element can be associated with the accumulation container 14, made of transparent material and configured to at least partly show the content of the accumulation container 14.

The presence of the detector 29 and/or the inspection element allows to determine when it is necessary to discharge the accumulation container 14 because it is full.

According to possible embodiments of the present invention, the accumulation container 14 can be provided with at least an aperture 30, in the case in fig. 1 with two apertures 30, connected to a valve 31 which allows to put the accumulation container 14 at least at atmospheric pressure.

According to a preferential solution, the apertures 30 are made in a top portion of the accumulation container 14, that is, in direct proximity to the connection zone with the through aperture 13 of the clarifier tank 11. This prevents the solid portion remaining retained by depression in the accumulation container 14, during discharge operations.

According to a possible solution, the valve 31 can allow to put the accumulation compartment 27 directly at atmospheric pressure, by connecting it directly to the outside.

According to a variant embodiment, not shown, the valve 31 can be connected to a pressurization unit, configured to emit a stream of compressed air, or of liquid, inside the accumulation container 14 and to allow the subsequent discharge of the solid portion that has accumulated.

The pressurization unit can be separate and independent from the clarifier tank 11 and the accumulation container 14.

According to another embodiment of the present invention, the accumulation container 14 can be made as two or more components 60, selectively separable and reciprocally connected to each other to define the accumulation compartment 27. This facilitates the possible maintenance operations required for example if the material adheres to the walls of the accumulation container 14.

According to a possible solution, the components 60 are selectively connected to each other along a connection plane on which the axis of oblong development of the accumulation container 14 lies. According to a possible solution of the present invention, the treatment unit 10 can also comprise a collection container 32 to collect the solid portion which is discharged through the discharge aperture 21 of the accumulation container 14.

The collection container 32 is disposed under the discharge aperture 21.

The collection container 32 can comprise, merely by way of example, a bag, a box or similar or comparable elements.

According to a possible solution, shown in fig. 1, the collection container 32 can comprise a containing body 42, open at the bottom and provided with one or more obstruction elements 43, for example two valves of a grabber, selectively openable and closable on command by means of a command member to allow to discharge or respectively retain the solid portion received from the accumulation container 14.

The containing body 42 can be conformed in substantially the same way as the accumulation container 14 described above, that is, it can have a truncated cone or truncated pyramid shape, to allow to discharge the portion, possibly also solid, contained inside it.

The collection container 32 can be configured to promote the draining and/or drying of the slurry discharged from the accumulation container 14, for example it can have discharge holes or a gap for the water to leak, between the obstruction elements 43.

The solid portion discharged from the accumulation container 14 is usually in the form of slurry and, after a natural period of dripping and drying, it can be at least partly used to produce concrete, together with the inert materials, to make road beds, to fill, mixed with sand, bags used to prevent flooding, or possibly to be taken to the dump after drying. In this way, the residual part intended for the dump can be eliminated or at least somewhat reduced to really insignificant quantities.

Cleaning devices can also be inserted in the accumulation container 14, suitably connected to introduce pressurized water to clean the accumulation container 14 once the solid portion has been discharged.

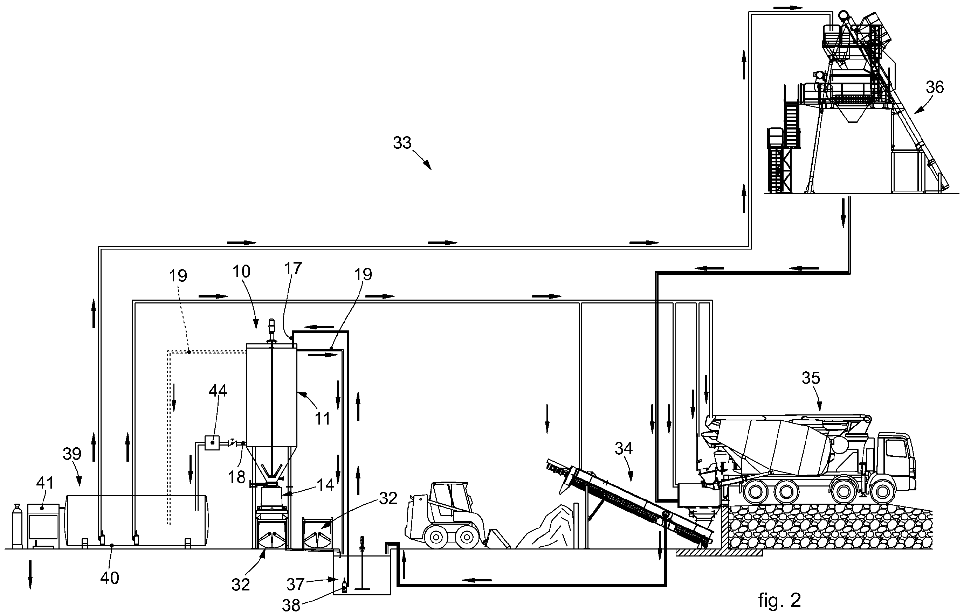

Embodiments of the present invention also concern a treatment plant 33 comprising a treatment unit 10 as described above. With reference to fig. 2, the connections between the different operating units that transfer water still to be treated are shown with bold lines, while the connections between the operating units that transfer clarified water are shown with a double line.

Embodiments of the present invention can provide that the treatment plant 33 comprises a plurality of treatment units 10 disposed and connected in series with each other, or in parallel, to perform a progressive decantation of the waste water and/or to increase productivity.

The treatment plant 33 according to the present invention can comprise a separation unit 34 in which residues deriving for example from washing a truck pump 35 or other equipment 36 for example concrete making equipment, are inserted to remove the larger components such as gravel, pebbles, sand, silt or suchlike. In particular, the separation unit 34 is configured to separate elements from the water with a grain size larger than 0.25 mm.

The separation unit 34 can comprise at least one of either mechanical separators, with a screw, rotary drum, cups or suchlike.

Merely by way of example, the separation unit 34 can be configured to remove from the water about 50%-60% of the solid components in it.

The water has a high content of fine particles still in suspension.

According to one embodiment of the present invention, the treatment plant 33 comprises at least a containing tank 37 in which the waste water exiting from the separation unit 34 and deriving from the removal of the components of larger grain size is temporarily stored before being transferred to the treatment unit 10.

The containing tank 37 can comprise a stirrer 38, provided to keep the fine particles in suspension, and prevent their decantation.

The water contained in the containing tank 37 is subsequently introduced into the treatment unit 10 to be subsequently decanted.

The transfer of the waste water from the separation unit 34 to the containing tank 37 and to the treatment unit 10 can be performed by hydraulic pumps, not shown in the drawings.

According to possible embodiments of the present invention, and to make the steps to deposit the fine particles in the treatment unit 10 quicker, it can be provided that flocculants are added to the waste water. The addition of flocculants can take place for example in the containing tank 37 or in the tank 11 of the treatment unit 10.

According to one embodiment, the treatment plant 33 can comprise a tank of clarified water 40 in which the clarified water discharged by the discharge member 18 of the treatment unit 10 is temporarily stored.

The water contained in the tank of clarified water 40 can be used as it is, without any restriction whatsoever, for washing machines and equipment inside the treatment plant 33. In this way a big saving is obtained in the water used in the plant for cleaning the equipment since it can be re-used numerous times and also define a closed-ring circuit for the continuous re-use of the water, supplying possible integrations and without discharging it into the sewers.

Furthermore, when the local regulations and the production process allow it, the clarified water can be used totally or partly for the production of concrete.

To increase the quantity of water usable for these last purposes, the water clarified in the treatment unit 10 can be further treated with a de-oiling device 44, configured to eliminate additives possibly still present in the water.

The de-oiling device 44 can comprise gravity devices, absorption, suction, filtering or coalescence devices.

According to possible solutions, the de-oiling device 44 can be associated with the treatment unit 10, for example located inside the tank 11, or downstream of the discharge member 18, for example in the connection pipe between the treatment unit 10 and the tank of clarified water 40, or in the latter.

According to a possible embodiment, the treatment plant 33 comprises a chemical treatment unit 39, configured to treat chemically the clarified water discharged from the treatment unit 10.

According to one embodiment, the chemical treatment unit 39 can be configured to reduce the level of alkalinity of the clarified water exiting from the treatment unit 10.

According to a possible embodiment, shown for example in fig. 2, the chemical treatment unit 39 comprises a containing body, in this case the same tank of clarified water 40 in which the clarified water is discharged, and feed devices 41 configured to inject carbon dioxide into the water contained in the tank of clarified water 40.

The injection of carbon dioxide into the water allows to reduce the pH of the water generally to values lower than 9.5, which would allow possibly to discharge the water thus treated also into the sewers.

It is clear that modifications and/or additions of parts may be made to the unit and method for treating waste water as described heretofore, without departing from the field and scope of the present invention.

It is also clear that, although the present invention has been described with reference to some specific examples, a person of skill in the art shall certainly be able to achieve many other equivalent forms of unit and method for treating waste water, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Treatment unit comprising:
- a clarifier tank (11) configured to contain waste water, and provided with a bottom portion (12) in which a through aperture (13) is made;
- an accumulation container (14) disposed below said tank (11) and connected to said through aperture (13), said accumulation container (14) being configured to receive and contain the solid portion decanted from said waste water coming from said tank (11), and provided with a discharge aperture (21) to allow the discharge of said solid portion;
- a first closing device (20) associated with said through aperture (13) of said tank (11) and configured to selectively separate said tank (11) from said accumulation container (14); and
- a second closing device (22) associated with the discharge aperture (21) of said accumulation container (14) and configured to allow the selective discharge of said solid portion, wherein said discharge aperture (21) has a cross section size equal to, or greater than, the maximum cross section size of said accumulation container (14), wherein said accumulation container (14) defines an accumulation compartment (27), for said solid portion, **characterized in that** said accumulation compartment (27) has a conical cross section shape with a taper that opens toward said discharge aperture (21), **and in that** said discharge aperture (21) is made in correspondence with the bottom of said accumulation container (14).

2. Treatment unit as in claim 1, **characterized in that** said second closing device (22) comprises at least a shutter element (25) selectively movable to open or close the discharge aperture (21).

3. Treatment unit as in claim 2, **characterized in that** said shutter element (25) is selectively movable from a first position, in which it completely obstructs the discharge aperture (21), to a second position in which the discharge aperture (21) is open, said shutter element (25) rotating around at least one fulcrum (47) in order to pass from said first to said second position.

4. Treatment unit as in claim 3, **characterized in that** said shutter element (25) is defined by a curved shaped plate (48) and by support arms (49) connected by a first end (50) to said shaped plate (48) and by a second end (51) to respective fulcrums (47).

5. Treatment unit as in any of the claims from 2 to 4, **characterized in that** said shutter element (25) is provided with a through auxiliary aperture (57) with which a discharge valve (58) is associated and configured to selectively close/open the auxiliary aperture (57) of the shutter element (25).

6. Treatment unit as in any claim hereinbefore, **characterized in that** said accumulation container (14) is made of one or more components (60), selectively separable and reciprocally connected to each other, to define said accumulation compartment (27).

7. Treatment unit as in any claim hereinbefore, **characterized in that** said accumulation compartment (27) has a taper with an angle of taper (α) comprised between 2° and 20°.

8. Treatment unit as in any claim hereinbefore, **characterized in that** said accumulation container (14) is provided with a covering layer of said accumulation compartment (27) with an anti-adherent function for the solid portion that is deposited and an anti-corrosive function of the accumulation container (14).

9. Treatment unit as in any claim hereinbefore, **characterized in that** said accumulation container (14) is provided with at least an aperture (30) connected to a valve (31) configured to selectively put said accumulation container (14) at least at atmospheric pressure, said aperture (30) being made in direct proximity to the connection zone with said through aperture (13) of said tank (11).

10. Treatment unit as in any claim hereinbefore, **characterized in that** a detector (29) is associated with said accumulation container (14), configured to detect the level of the solid portion deposited in said accumulation container (14).

11. Treatment unit as in any claim hereinbefore, **characterized in that** it comprises a collection container (32) of the solid portion discharged through said discharge aperture (21), said collection container (32) being provided with a containing body (42) open on the bottom, with a truncated cone or truncated pyramid shape and equipped with one or more obstruction elements (43), selectively openable and closable to allow the discharge or respectively the retention of the solid portion received from the accumulation container (14).

12. Treatment plant (33) comprising a separation unit (34) configured to remove the larger components from waste water, and a treatment unit (10) as in any claim hereinbefore, configured to treat said waste water exiting from said separation unit (34).

13. Treatment plant as in claim 12, **characterized in that** it comprises a chemical treatment unit (39) configured to chemically treat clarified water discharged from said treatment unit (10).

14. Treatment method for waste water, which provides:
- to introduce said waste water into a clarifier tank (11) and to subsequently decant it to separate the solid portion present;
- to accumulate said decanted solid portion in an accumulation container (14) disposed below said tank (11) and connected to said tank (11) through a through aperture (11) made in a bottom portion (12) of said tank (11); and
- to discharge said solid portion that has accumulated in said accumulation container (14) by selectively closing said through aperture (13), with a first closing device (20), and selectively opening a second closing device (22) associated with a discharge aperture (21) of said accumulation container (14), wherein said solid portion is discharged through said discharge aperture (21) which has a cross section size equal to, or greater than, the maximum cross section size of said accumulation container (14), wherein said accumulation container (14) defines an accumulation compartment (27), for said solid portion, **characterized in that** said accumulation compartment (27) is made with a conical cross section shape with a taper that opens toward said discharge aperture (21), **and in that** said discharge aperture (21) is made in correspondence with the bottom of said accumulation container (14).

## Patentansprüche

1. Behandlungseinheit, umfassend:
- einen Klärtank (11), der ausgelegt ist, Abwasser zu enthalten, und bereitgestellt wird mit einem Bodenabschnitt (12), in welche eine Durchöffnung (13) eingelassen ist;
- einen Akkumulationsbehälter (14), der unter dem Tank (11) angeordnet ist und mit dem Durchloch (13) verbunden ist, wobei der Akkumulationsbehälter (14) ausgelegt ist, den Feststoffanteil, der aus dem Abwasser, das vom Tank (11) kommt, dekantiert wird, aufzunehmen und zu enthalten, und bereitgestellt wird mit einer Ablassöffnung (21), um das Ablassen des Feststoffanteils zu ermöglichen;
- eine erste Verschlussvorrichtung (20), die mit der Durchöffnung (13) des Tanks (11) assoziiert ist und ausgelegt ist, selektiv den Tank (11) von dem Akkumulationsbehälter (14) zu trennen; und
- eine zweite Verschlussvorrichtung (22), die mit der Ablassöffnung (21) des Akkumulationsbehälters (14) assoziiert ist und ausgelegt ist, das selektive Ablassen des Feststoffanteils zu ermöglichen, wobei die Ablassöffnung (21) eine Querschnittsgröße aufweist, die gleich zu der oder größer als die maximale/n Querschnittsgröße des Akkumulationsbehälters (14) ist, wobei der Akkumulationsbehälter (14) ein Akkumulationskompartiment (27) für den Feststoffanteil definiert, **dadurch gekennzeichnet, dass** das Akkumulationskompartiment (27) eine konische Querschnittsform mit einer Formschräge aufweist, die sich zur Ablassöffnung (21) öffnet, **und dadurch, dass** die Ablassöffnung (21) in Entsprechung zu dem Boden des Akkumulationsbehälters (14) ausgelegt ist.

2. Behandlungseinheit nach Anspruch 1, **dadurch gekennzeichnet, dass** die zweite Verschlussvorrichtung (22) mindestens ein Shutter-Element (25) umfasst, das selektiv beweglich ist, um die Ablassöffnung (21) zu öffnen und zu schließen.

3. Behandlungseinheit nach Anspruch 2, **dadurch gekennzeichnet, dass** das Shutter-Element (25) selektiv beweglich ist aus einer ersten Position, in welcher es vollständig die Ablassöffnung (21) verschließt, in eine zweite Position, in welcher die Ablassöffnung (21) offen ist, wobei das Shutter-Element (25) um mindestens einen Drehpunkt (47) rotiert, um von der ersten in die zweite Position überzugehen.

4. Behandlungseinheit nach Anspruch 3, **dadurch gekennzeichnet, dass** das Shutter-Element (25) durch eine kurvenförmige Platte (48) und durch Stützarme (49), verbunden durch ein erstes Ende (50) zu der geformten Platte (48) und durch ein zweites Ende (51) zu den jeweiligen Drehpunkten (47), definiert ist.

5. Behandlungseinheit nach einem der Ansprüche 2 bis 4, **dadurch gekennzeichnet, dass** das Shutter-Element (25) mit einer Hilfsdurchöffnung (57) versehen ist, mit welcher eine Ablassklappe/ventil (58) assoziiert ist, und ausgelegt ist, um selektiv die Hilfsöffnung (57) des Shutter-Elements (25) zu schließen/öffnen.

6. Behandlungseinheit nach einem der vorgenannten Ansprüche, **dadurch gekennzeichnet, dass** der Akkumulationsbehälter (14) aus einer oder mehr Komponenten (60) gefertigt ist, die selektiv separierbar und reziprok miteinander verbunden sind, um das Akkumulationskompartiment (27) zu definieren.

7. Behandlungseinheit nach einem der vorgenannten Ansprüche, **dadurch gekennzeichnet, dass** das Akkumulationskompartiment (27) eine Formschräge mit einem Abschrägewinkel (α) von 2° bis 20° aufweist.

8. Behandlungseinheit nach einem der vorgenannten Ansprüche, **dadurch gekennzeichnet, dass** der Akkumulationsbehälter (14) mit einer Deckschicht des Akkumulationskompartiments (27) mit einer anti-adhärenten Funktion für den Feststoffanteil, der abgeschieden ist, und mit einer anti-korrosiven Funktion des Akkumulationsbehälters (14) versehen ist.

9. Behandlungseinheit nach einem der vorgenannten Ansprüche, **dadurch gekennzeichnet, dass** der Akkumulationsbehälter (14) mit mindestens einer Öffnung (30) versehen ist, die mit einem Ventil (31) verbunden ist, ausgelegt, selektiv den Akkumulationsbehälter (14) mindestens unter Atmosphärendruck zu setzen, wobei die Öffnung (30) in direkter Nachbarschaft zu der Verbindungszone mit der Durchöffnung (13) des Tanks (11) ausgelegt ist.

10. Behandlungseinheit nach einem der vorgenannten Ansprüche, **dadurch gekennzeichnet, dass** ein Detektor (29) mit dem Akkumulationsbehälter (14) assoziiert ist, ausgelegt, den Pegelstand des Feststoffanteils, der in dem Akkumulationsbehälter (14) abgeschieden ist, zu detektieren.

11. Behandlungseinheit nach einem der vorgenannten Ansprüche, **dadurch gekennzeichnet, dass** sie einen Sammelcontainer (32) für den Feststoffanteil umfasst, der durch die Ablassöffnung (21) abgelassen wird, wobei der Sammelcontainer (32) mit einem Aufnahmekörper (42), der im Boden offen ist, mit einer abgeschnittenen Konus- oder einer abgeschnittenen Pyramiden-Form versehen ist und ausgerüstet ist mit einem oder mehr Verschlusselement/en (43), die selektiv öffnen- und schließbar sind, um das Ablassen bzw. das Rückhalten des Feststoffanteils, der aus dem Akkumulationsbehälter (14) aufgenommen worden ist, zu ermöglichen.

12. Behandlungsanlage (33), umfassend eine Separiereinheit (34), ausgelegt, die größeren Komponenten aus dem Abwasser zu entfernen, und eine Behandlungseinheit (10) nach einem der vorgenannten Ansprüche, ausgelegt, das Abwasser, das aus der Separiereinheit (34) austritt, zu behandeln.

13. Behandlungsanlage nach Anspruch 12, **dadurch gekennzeichnet, dass** sie eine chemische Behandlungseinheit (39) umfasst, ausgelegt, das geklärte Wasser, das aus der Behandlungseinheit (10) abgelassen wird, chemisch zu behandeln.

14. Behandlungsverfahren für Abwasser, welches bereitstellt:
- Einführen des Abwassers in einen Klärtank (11) und nachfolgendes Dekantieren, um anwesende Feststoffanteile zu separieren;
- Akkumulieren des dekantierten Feststoffanteils in einem Akkumulationsbehälter (14), der unterhalb des Tanks (11) angeordnet ist und mit dem Tank (11) durch eine Durchöffnung (11) verbunden ist, die in einem Bodenabschnitt (12) des Tanks (11) eingelassen ist; und
- Ablassen des Feststoffanteils, der sich in dem Akkumulationsbehälter (14) akkumuliert hat, durch selektives Schließen der Durchöffnung (13) mit einer ersten Verschlussvorrichtung (20) und durch selektives Öffnen der zweiten Verschlussvorrichtung (22), die mit einer Ablassöffnung (21) des Akkumulationsbehälters (14) assoziiert ist, wobei der Feststoffanteil durch die Ablassöffnung (21) abgelassen wird, welche eine Querschnittsgröße aufweist, die gleich zu der oder größer als die maximale/n Querschnittsgröße des Akkumulationsbehälters (14) ist, wobei der Akkumulationsbehälter (14) ein Akkumulationskompartiment (27) für den Feststoffanteil definiert, **dadurch gekennzeichnet, dass** das Akkumulationskompartiment (27) mit einer konischen Querschnittsform mit einer Formschräge, die sich zu der Ablassöffnung (21) öffnet, ausgestaltet ist, **und dadurch, dass** die Ablassöffnung (21) in Entsprechung zu dem Boden des Akkumulationsbehälters (14) ausgelegt ist.

## Revendications

1. Unité de traitement comprenant :
- un réservoir de clarificateur (11) configuré pour contenir des eaux usées, et muni d'une partie inférieure (12) dans laquelle est réalisée une ouverture traversante (13) ;
- un conteneur d'accumulation (14) disposé en dessous dudit réservoir (11) et connecté à ladite ouverture traversante (13), ledit conteneur d'accumulation (14) étant configuré pour recevoir et contenir la partie solide décantée desdites eaux usées provenant dudit réservoir (11), et muni d'une ouverture de décharge (21) pour permettre la décharge de ladite partie solide ;
- un premier dispositif de fermeture (20) associé à ladite ouverture traversante (13) dudit réservoir (11) et configuré pour séparer sélectivement ledit réservoir (11) dudit conteneur d'accumulation (14) ; et
- un second dispositif de fermeture (22) associé à l'ouverture de décharge (21) dudit conteneur d'accumulation (14) et configuré pour permettre la décharge sélective de ladite partie solide, dans lequel ladite ouverture de décharge (21) a une taille de section transversale égale à, ou supérieure à la taille de section transversale maximum dudit conteneur d'accumulation (14), dans lequel ledit conteneur d'accumulation (14) définit un compartiment d'accumulation (27) pour ladite partie solide, **caractérisé en ce que** ledit compartiment d'accumulation (27) a une forme de section transversale avec une conicité qui s'ouvre vers ladite ouverture de décharge (21), **et en ce que** ladite ouverture de décharge (21) est réalisée en correspondance avec la partie inférieure dudit conteneur d'accumulation (14).

2. Unité de traitement selon la revendication 1, **caractérisée en ce que** ledit second dispositif de fermeture (22) comprend au moins un élément d'obturation (25) mobile sélectivement pour ouvrir ou fermer l'ouverture de décharge (21).

3. Unité de traitement selon la revendication 2, **caractérisée en ce que** ledit élément d'obturation (25) est mobile sélectivement d'une première position dans laquelle il obstrue complètement l'ouverture de décharge (21) jusqu'à une seconde position dans laquelle l'ouverture de décharge (21) est ouverte, ledit élément d'obturation (25) tournant autour d'au moins un point d'appui (47) afin de passer de ladite première position à ladite seconde position.

4. Unité de traitement selon la revendication 3, **caractérisée en ce que** ledit élément d'obturation (25) est défini par une plaque mise en forme incurvée (48) et par des bras de support (49) reliés par une première extrémité (50) à ladite plaque mise en forme (48) et par une seconde extrémité (51) aux points d'appui respectifs (47).

5. Unité de traitement selon l'une quelconque des revendications 2 à 4, **caractérisée en ce que** ledit élément d'obturation (25) est muni d'une ouverture auxiliaire traversante (57) à laquelle une soupape de décharge (58) est associée et configurée pour fermer/ouvrir sélectivement l'ouverture auxiliaire (57) de l'élément d'obturation (25).

6. Unité de traitement selon l'une quelconque des revendications précédentes, **caractérisée en ce que** ledit conteneur d'accumulation (14) est constitué d'un ou plusieurs composants (60), séparables sélectivement et reliés réciproquement l'un à l'autre, pour définir ledit compartiment d'accumulation (27).

7. Unité de traitement selon l'une quelconque des revendications précédentes, **caractérisée en ce que** ledit compartiment d'accumulation (27) a une conicité avec un angle de conicité (α) compris entre 2° et 20°.

8. Unité de traitement selon l'une quelconque des revendications précédentes, **caractérisée en ce que** ledit conteneur d'accumulation (14) est muni d'une couche de recouvrement dudit compartiment d'accumulation (27) avec une fonction anti-adhérente pour la partie solide qui est déposée et une fonction anticorrosion du conteneur d'accumulation (14).

9. Unité de traitement selon l'une quelconque des revendications précédentes, **caractérisée en ce que** ledit conteneur d'accumulation (14) est muni d'au moins une ouverture (30) reliée à une soupape (31) configurée pour placer sélectivement ledit conteneur d'accumulation (14) au moins à une pression atmosphérique, ladite ouverture (30) étant réalisée à proximité directe de la zone de connexion avec ladite ouverture traversante (13) dudit réservoir (11).

10. Unité de traitement selon l'une quelconque des revendications précédentes, **caractérisée en ce qu'un** détecteur (29) est associé audit conteneur d'accumulation (14), configuré pour détecter le niveau de la partie solide déposée dans ledit conteneur d'accumulation (14).

11. Unité de traitement selon l'une quelconque des revendications précédentes, **caractérisée en ce qu'elle** comprend un conteneur de collecte (32) de la partie solide évacuée par ladite ouverture d'évacuation (21), ledit conteneur de collecte (32) étant muni d'un corps de confinement (42) ouvert sur la partie inférieure, en forme de cône tronqué ou de pyramide tronquée et muni d'un ou de plusieurs éléments d'obstruction (43), pouvant être ouvert(s) et fermé(s) de manière sélective pour permettre le déchargement ou respectivement la retenue de la partie solide reçue à partir du conteneur d'accumulation (14).

12. Installation de traitement (33) comprenant une unité de séparation (34) configurée pour éliminer les composants les plus importants des eaux usées et une unité de traitement (10) selon l'une quelconque des revendications précédentes, configurée pour traiter lesdites eaux usées sortant de ladite unité de séparation (34).

13. Installation de traitement selon la revendication 12, **caractérisée en ce qu'elle** comprend une unité de traitement chimique (39) configurée pour traiter chimiquement l'eau clarifiée déchargée de ladite unité de traitement (10).

14. Méthode de traitement d'eaux usées, comprenant les étapes consistant à :
- introduire lesdites eaux usées dans un réservoir de clarificateur (11) et ensuite les décanter pour séparer la partie solide présente ;
- accumuler ladite partie solide décantée dans un conteneur d'accumulation (14) disposé au-dessous dudit réservoir (11) et relié audit réservoir (11) par une ouverture traversante (11) réalisée dans une partie inférieure (12) dudit réservoir (11) ; et
- décharger ladite partie solide qui s'est accumulée dans ledit conteneur d'accumulation (14) en fermant sélectivement ladite ouverture traversante (13), avec un premier dispositif de fermeture (20), et en ouvrant sélectivement un second dispositif de fermeture (22) associé à une ouverture de décharge (21) dudit conteneur d'accumulation (14), dans laquelle ladite partie solide est déchargée à travers ladite ouverture de décharge (21) qui a une taille de section transversale égale ou supérieure à la taille de section transversale maximum dudit conteneur d'accumulation (14), dans lequel ledit conteneur d'accumulation (14) définit un compartiment d'accumulation (27), pour ladite partie solide, **caractérisée en ce que** ledit compartiment d'accumulation (27) est réalisé avec une forme de section transversale conique avec une conicité qui s'ouvre vers ladite ouverture de décharge (21), **et en ce que** ladite ouverture de décharge (21) est réalisée en correspondance avec la partie inférieure dudit conteneur d'accumulation (14).
